# EUROPÄISCHE PATENTANMELDUNG

(11) **EP 3 293 408 A1**
(43) Veröffentlichungstag der Anmeldung: **14.03.2018**
(21) Anmeldenummer: 17183902.0
(22) Anmeldetag: 31.07.2017
(51) Int. Cl.: F16D 48/06

(54) **VERFAHREN ZUM BETRIEB EINES KUPPLUNGSAKTUATORS, STEUERUNGSEINRICHTUNG SOWIE KRAFTFAHRZEUG**

(30) Priorität: 02.09.2016 DE 102016216629
(71) Anmelder: ZF Friedrichshafen AG, 88046 Friedrichshafen (DE)
(72) Erfinder: Buhl, Jörg, 97453 Schonungen (DE); Mäder, Fred, 97532 Üchtelhausen (DE)

(57) **Zusammenfassung**

Die Erfindung betrifft ein Verfahren zum Betrieb eines Kupplungsaktuators im Antriebsstrang eines Kraftfahrzeugs mit den Schritten:
- Ermittlung wenigstens eines temperaturbezogenen Betriebsparameters des Kraftfahrzeugs,
- Festlegung wenigstens eines Steuerungsparameters des Kupplungsaktuators in Abhängigkeit des ermittelten Betriebsparameters.

Daneben betrifft die Erfindung eine Steuerungseinrichtung.

Daneben betrifft die Erfindung ein Kraftfahrzeug.

## Beschreibung

Die Erfindung betrifft ein Verfahren zum Betrieb eines Kupplungsaktuators in Antriebsstrang eines Kraftfahrzeugs.

Es ist bekannt, Kupplungen in Kraftfahrzeugen mittels eines Kupplungsaktuators zu betätigen. Dies ist beispielsweise in automatisierten Schaltgetrieben der Fall oder in Kraftfahrzeugen mit einem sogenannten E-clutch-Betätigungssystem. Dabei ist im Unterschied zu einem automatisierten Schaltgetriebe noch ein Kupplungspedal vorhanden, wobei das Kupplungspedal einen Positionssensor zur Erfassung der Kupplungspedalposition aufweist. Die Betätigung der Kupplung erfolgt aber nicht mehr direkt durch Bewegung des Kupplungspedals sondern mittels des Kupplungsaktuators.

Die dabei verwendeten Kupplungsaktuatoren können sehr unterschiedlich aufgebaut sein. Allen gemeinsam ist ein Elektromotor als Antriebseinheit. Dessen Drehmoment wird zur Betätigung der Kupplung verwendet. Der auf den Elektromotor folgende Aufbau kann sehr unterschiedlich sein. Als elektrohydraulische Kupplungsaktuatoren werden dabei beispielsweise Kupplungsaktuatoren bezeichnet, bei denen über den Elektromotor ein Geberzylinder und über diesen ein Nehmerzylinder betätigt wird.

Wird im Kupplungsaktuator ein nicht weiter optimierter Elektromotor zusammen mit einem relativ einfachen konstruktiven Aufbau verwendet, besteht die Gefahr von Ausfällen des Kupplungsaktuators.

Ausgehend hiervon ist es Aufgabe der vorliegenden Erfindung, ein Verfahren anzugeben, mit dem ein Kupplungsaktuatorausfall sicherer betrieben werden kann.

Zur Lösung dieses Problems wird ein Verfahren vorgeschlagen, das die folgenden Schritte aufweist:
- Ermittlung wenigstens eines temperaturbezogenen Betriebsparameters des Kraftfahrzeugs,
- Festlegung wenigstens eines Steuerparameters des Kupplungsaktuators in Abhängigkeit des ermittelten Betriebsparameters.

Als Kern der Erfindung wird angesehen, dass der Kupplungsaktuator so betrieben werden kann, dass eine Überhitzung vermieden wird. Es hat sich nämlich herausgestellt, dass bei bestimmten Situationen eine Überhitzung des Elektromotors des Kupplungsaktuators eintreten kann, und zwar insbesondere dann, wenn Kupplungsaktuatoren aus Standardbauteilen aufgebaut werden. Um die Kupplungsaktuatorik weiter nur aus Standardbauteilen bestehen lassen zu können wird daher ein besonderes Steuerungsverfahren in diesen Situationen verwendet, um nicht einen Umbau des Kupplungsaktuators vornehmen zu müssen.

Vorzugsweise kann als wenigstens ein Betriebsparameter die Anzahl der Betätigungsvorgänge des Kupplungsaktuators in einem vorgegebenen Zeitabschnitt verwendet werden. Hier wird bevorzugt ein fester Zeitabschnitt verwendet, beispielsweise die Betätigungsvorgänge pro Minute. Dabei lässt sich in Testreihen feststellen, wo die durchschnittliche Belastungsgrenze des Elektromotors liegt.

Weiterhin kann als wenigstens ein Betriebsparameter die Geschwindigkeit des Kraftfahrzeugs in einem vorgegebenen Zeitabschnitt verwendet werden. Hierbei kann entweder die Durchschnittsgeschwindigkeit, die Spitzengeschwindigkeit oder die Geschwindigkeitsdifferenz zwischen maximaler und minimaler Geschwindigkeit des Kraftfahrzeugs berücksichtigt werden. Bei diesem Betriebsparameter kann der Zeitabschnitt entweder wie bereits beschrieben feststehend verwendet werden, es kann aber auch ein dynamisch vorgegebener Zeitabschnitt verwendet werden. Ein dynamischer Zeitabschnitt ergibt sich beispielsweise dadurch, dass ein Zeitraum vorgegeben wird, indem eine bestimmte Anzahl an Betätigungsvorgängen vorkommen soll, beispielsweise drei Betätigungsvorgänge.

Weiterhin oder alternativ können als wenigstens ein Betriebsparameter die benutzten Gänge in einem vorgegebenen Zeitabschnitt verwendet werden. Werden beispielsweise nur die Gänge 1 und 2 verwendet, so spricht dies dafür, dass das Kraftfahrzeug nur sehr langsam fährt.

Weiterhin oder alternativ kann als wenigstens ein Betriebsparameter das Vorliegen von Stop-and-Go-Verkehr verwendet werden. Die beschriebenen und teilweise noch zu beschreibenden Betriebsparameter sind selbst ein Indiz jeweils für Stop-and-Go-Verkehr. Hier ist jedoch gemeint, dass ein anderes Assistenzsystem Stop-and-Go-Verkehr ermittelt und ein entsprechendes Datum abspeichert oder an die Steuerungseinrichtung weitergibt. Anhand dieses Datums alleine kann dann das Vorliegen von Stop-and-Go-Verkehr erkannt werden. Die Berücksichtigung der weiteren Betriebsparameter ist dann selbstverständlich weiterhin möglich, jedoch nicht zwingend.

Weiterhin oder alternativ kann als wenigstens ein Betriebsparameter die Betätigung eines Start-Stopp-Systems in einem vorgegebenen Zeitabschnitt verwendet werden. Insbesondere kann die Anzahl der Betätigungen als Betriebsparameter verwendet werden. Finden beispielsweise drei oder mehr Betätigungen des Start-Stopps-Systems in einer Minute statt, kann von Stop-and-Go-Verkehr ausgegangen werden.

Ein Start-Stopp-System ist dabei ein Assistenzsystem zur Reduzierung von Kraftstoffverbrauch, wobei der Motor im Stand abgeschaltet und bei erkanntem Willen zur Weiterfahrt automatisch wieder gestartet wird. Als Willen zur Weiterfahrt wird beispielsweise die Betätigung des Gaspedals interpretiert.

Zusätzlich zur Veränderung des Betriebs des Kupplungsaktuators kann selbstverständlich auch die Kühlung des Elektromotors verstärkt werden. Beispielsweise kann der Kühlluftstrom des Kühlerlüfters verstärkt werden. Hierzu wird der Aktuator im Luftstrom des Kühlerlüfters angeordnet und der Kühlerlüfter entsprechend gesteuert.

Weiterhin kann bei einem elektrohydraulischen Aktuator die Kolbenentlüftung durch den Aktuatormotor erfolgen.

Weiter alternativ kann die Nachlaufleitung zum Kühlen des Aktuatormotors verwendet werden.

Durch die Kombination der Maßnahmen, nämlich Verringerung der Leistung des Aktuators und Erhöhung der Kühlung, kann eine Überhitzung des Elektromotors des Aktuators besonders effektiv vermieden werden.

Um die Leistung des Kupplungsaktuators zu senken kann als Steuerparameter der Motoranlaufstrom des Elektromotors des Kupplungsaktuators verwendet und begrenzt werden. Dadurch sinkt zwar auch die Reaktionszeit des Kupplungsaktuators, diese ist jedoch bei Stop-and-Go-Verkehr sowieso nicht entscheidend.

Zusätzlich oder alternativ kann als Steuerparameter die Drehzahl des Elektromotors des Kupplungsaktuators verwendet und begrenzt werden. Auch durch die Begrenzung dieses Steuerparameters kann die Leistung des Elektromotors herabgesetzt werden.

Vorteilhafterweise kann als Kupplungsaktuator ein elektrohydraulischer Kupplungsaktuator verwendet werden. Bei Kupplungsaktuatoren, die möglichst aus Standardbauteilen bestehen sollen, ist eine Anbindung an einen Geberzylinder besonders einfach. Somit ist die Ausgestaltung als elektrohydraulischer Kupplungsaktuator bevorzugt.

Mit der Verwendung von Standardkomponenten ist dabei gemeint, dass ein Elektromotor verwendet wird, der auch in vielen anderen Geräten und nicht nur einem Kupplungsaktuator eingesetzt werden kann. An diesen wird ein einfach aufgebautes Aktuatorgetriebe angesetzt, das das Drehmoment des Elektromotors auf einen Geberzylinder überträgt.

Daneben betrifft die Erfindung eine Steuerungseinrichtung für ein Kraftfahrzeug. Die Steuerungseinrichtung zeichnet sich dadurch aus, dass sie zur Durchführung des Verfahrens wie beschrieben ausgebildet ist.

Daneben betrifft die Erfindung ein Kraftfahrzeug. Das Kraftfahrzeug zeichnet sich dadurch aus, dass die Steuerungseinrichtung wie beschrieben ausgebildet ist. Weiter Vorteile, Merkmale und Einzelheiten der Erfindung ergeben sich aus der folgenden Beschreibung von Ausführungsbeispielen und Figuren. Dabei zeigen:
- Figur 1: ein Kraftfahrzeug, und
- Figur 2: ein Ablaufschema zum Betrieb eines Kupplungsaktuators.

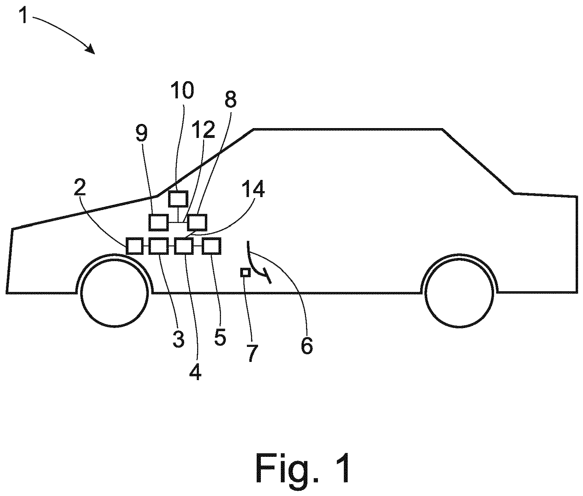

Figur 1 zeigt ein Kraftfahrzeug 1 mit einer Antriebsvorrichtung 2, einer Kupplung 3, einem Kupplungsaktuator 4 und einem Getriebe 5. Je nach Ausgestaltung des Antriebsstrangs kann es sich um ein Kraftfahrzeug 1 mit einem automatisierten Schaltgetriebe handeln, in diesem Fall ist noch ein Getriebeaktuator vorzusehen. Alternativ kann es sich um ein Fahrzeug mit einer sogenannten E-Clutch handeln. Dann ist weiterhin ein Kupplungspedal 6 vorhanden, dessen Position über einen Sensor 7 erfasst wird. Die Signale des Sensors 7 werden dabei zur Steuerung des Kupplungsaktuators 4 verwendet.

Auch die Steuerungseinrichtung 8 ist lediglich schematisch dargestellt. Sie ist mit dem Sensor 7 und dem Kupplungsaktuator 4 und gegebenenfalls mit weiteren Sensoren verbunden. Insbesondere kann die Steuerungseinrichtung 8 von beliebigen Sensoren 9 oder anhand von Daten auf Speichern 10 Betriebsparameter 12 ermitteln. Anhand wenigstens eines Betriebsparameters 12 kann dann ein Steuerparameter 14 ermittelt werden, in dessen Abhängigkeit der Kupplungsaktuator 4 betrieben wird. Dargestellt ist zwar eine Weitergabe des Steuerparameters 14, jedoch können von der Steuerungseinrichtung 8 auch lediglich einzelne Steuersignale an den Kupplungsaktutor 4 gegeben werden und der eigentliche Steuerparameter 14 ist nur in der Steuerungseinrichtung 8 benutzt.

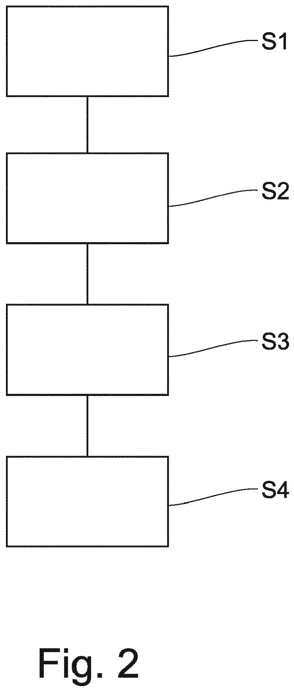

Figur 2 zeigt ein Ablaufschema zum Betrieb des Kupplungsaktuators.

In Schritt S1 werden mehrere Betriebsparameter erfasst. Als erster Betriebsparameter wird die Anzahl der Betätigungsvorgänge des Kupplungsaktuators 4 in den letzten zwei Minuten ermittelt. Dabei können die Betätigungsvorgänge samt einem Zeitstempel in einem Speicher 10 abgelegt sein, die Steuerungseinrichtung 8 kann aber auch mit einer Art Zeitschaltuhr arbeiten.

Als weiterer Betriebsparameter wird die durchschnittliche Geschwindigkeit des Kraftfahrzeugs 1 in dem vorgegebenen Zeitraum ermittelt.

Drittens wird die Anzahl der Betätigungen des Start-Stopp-Systems des Kraftfahrzeugs berücksichtigt. Diese drei Betriebsparameter werden in Schritt S2 zu einem Temperaturkoeffizienten aggregiert, indem die einzelnen Betriebsparameter 12 gewichtet oder ungewichtet aufaddiert werden. Der so erhaltene Zahlenwert kann entweder in Schritt S3 mit einem Schwellenwert verglichen werden. Alternativ kann der Zahlenwert auch einer Klasse zugeordnet werden. Dann können in Abhängigkeit des Überschreitens des Schwellenwerts oder der Zuordnung zu einer Klasse Maßnahmen vorgenommen werden.

Dabei können beispielsweise bei einer Zuordnung zu Klassen unterschiedliche Maßnahmen getroffen werden.

Liegt der aufaggregierte Wert des Temperaturkoeffizienten beispielsweise in einem ersten Bereich, rein exemplarisch zwischen drei und vier, so wird der Wert als unkritisch angesehen und keine Maßnahmen eingeleitet. Liegt der aufaggregierte Wert dagegen zwischen vier und fünf, wird der Motoranlaufstrom des Elektromotors des Kupplungsaktuators begrenzt. Liegt der aufaggregierte Wert dagegen zwischen 5 und 6, wird zusätzlich die Drehzahl des Elektromotors des Kupplungsaktuators begrenzt.

Liegt der Temperaturkoeffizienten dagegen zwischen sechs und sieben, wird der Kühlungslüfter eingeschaltet, um den Kupplungsaktuator 4 zusätzlich aktiv zu kühlen.

Wie beschrieben sind die genannten Grenzen der Klassen rein exemplarisch und völlig willkürlich. Es soll lediglich verdeutlicht werden, dass in Abhängigkeit einer erkannten Ausfallgefährdung einmal weniger und einmal mehr Maßnahmen ergriffen werden können, um eine Überhitzung des Elektromotors des Kupplungsaktuators zu vermeiden. Die Anzahl und die Reihenfolge der verwendeten Maßnahmen sind dabei grundsätzlich beliebig, insbesondere kann auch bei der ersten Klasse, ab der Maßnahmen ergriffen werden, die Kühlung eingeschaltet werden.

Wie eingangs bereits beschrieben tritt das Problem der Überhitzung insbesondere bei Kupplungsaktuatoren mit Standardkomponenten auf, also mit Komponenten, die auch in anderen Vorrichtungen als Kraftfahrzeug nur verwendet werden und lediglich aus Gründen der Kostenersparnis ohne Anpassung auch als Kupplungsaktuatoren eingesetzt werden. Das beschriebene Verfahren hilft dabei, Überhitzungsprobleme zu vermeiden.

### Bezugszeichen

- 1: Kraftfahrzeug
- 2: Antriebsvorrichtung
- 3: Kupplung
- 4: Kupplungsaktuator
- 5: Getriebe
- 6: Kupplungspedal
- 7: Sensor
- 8: Steuerungseinrichtung
- 9: Sensor
- 10: Speicher
- 12: Betriebsparameter
- 14: Steuerparameter

## Patentansprüche

1. Verfahren zum Betrieb eines Kupplungsaktuators (4) im Antriebsstrang eines Kraftfahrzeugs (1) mit den Schritten:
- Ermittlung wenigstens eines temperaturbezogenen Betriebsparameters (12) des Kraftfahrzeugs (1),
- Festlegung wenigstens eines Steuerungsparameters (14) des Kupplungsaktuators (4) in Abhängigkeit des ermittelten Betriebsparameters (12).

2. Verfahren nach Anspruch 1, **dadurch gekennzeichnet, dass** als wenigstens ein Betriebsparameter (12) die Anzahl der Betätigungsvorgänge des Kupplungsaktuators (4) in einem vorgegebenen Zeitabschnitt verwendet wird.

3. Verfahren nach Anspruch 1 oder 2, **dadurch gekennzeichnet, dass** als wenigstens ein Betriebsparameter (12) die Geschwindigkeit des Kraftfahrzeugs (1) in einem vorgegebenen Zeitabschnitt verwendet wird.

4. Verfahren nach einem der vorangehenden Ansprüche, **dadurch gekennzeichnet, dass** als wenigstens ein Betriebsparameter (12) die benutzten Gänge in einem vorgegebenen Zeitabschnitt verwendet wird.

5. Verfahren nach einem der vorangehenden Ansprüche, **dadurch gekennzeichnet, dass** als wenigstens ein Betriebsparameter (12) das Vorliegen von Stop-and-Go-Verkehr verwendet wird.

6. Verfahren nach einem der vorangehenden Ansprüche, **dadurch gekennzeichnet, dass** als wenigstens ein Betriebsparameter (12) die Betätigung eines Start-Stop-Systems in einem vorgegebenen Zeitabschnitt verwendet wird.

7. Verfahren nach einem der vorangehenden Ansprüche, **dadurch gekennzeichnet, dass** der vorgegebene Zeitabschnitt eine feste Dauer aufweist.

8. Verfahren nach einem der vorangehenden 1 bis 6, **dadurch gekennzeichnet, dass** der vorgegebene Zeitabschnitt in Abhängigkeit des Zeitpunktes wenigstens zweier Betätigungsvorgänge festgelegt wird.

9. Verfahren nach einem der vorangehenden Ansprüche, **dadurch gekennzeichnet, dass** die Kühlung des Kupplungsaktuators (4) in Abhängigkeit des Betriebsparameters (12) geregelt wird.

10. Verfahren nach einem der vorangehenden Ansprüche, **dadurch gekennzeichnet, dass** als Steuerparameter (14) der Motoranlaufstrom des Elektromotors des Kupplungsaktuators (4) verwendet und dieser begrenzt wird.

11. Verfahren nach einem der vorangehenden Ansprüche, **dadurch gekennzeichnet, dass** als Steuerparameter die Drehzahl des Elektromotors des Kupplungsaktuators verwendet und begrenzt wird.

12. Verfahren nach einem der vorangehenden Ansprüche, **dadurch gekennzeichnet, dass** als Kupplungsaktuator (4) ein elektrohydraulischer Kupplungsaktuator verwendet wird.

13. Steuerungseinrichtung (8) für ein Kraftfahrzeug (1), **dadurch gekennzeichnet, dass** die Steuerungseinrichtung (8) zur Durchführung des Verfahrens nach einem der vorangehenden Ansprüche ausgebildet ist.

14. Kraftfahrzeug (1) mit einer Steuerungseinrichtung (8), **dadurch gekennzeichnet, dass** die Steuerungseinrichtung (8) nach Anspruch 13 ausgebildet ist.
